# FASCICULE DE BREVET EUROPEEN

(11) **EP 3 056 707 B1**
(45) Date de publication et mention de la délivrance du brevet: **26.07.2017**
(21) Numéro de dépôt: 16152958.1
(22) Date de dépôt: 27.01.2016
(51) Int. Cl.: F01N 13/00, B60K 13/04

(54) **SUPPORT D'UNE SONDE EQUIPANT UNE LIGNE D'ECHAPPEMENT**
HALTERUNG EINER SONDE IN EINER ABGASANLAGE
BRACKET FOR A PROBE PROVIDED ON AN EXHAUST SYSTEM

(30) Priorité: 11.02.2015 FR 1551092
(43) Date de publication de la demande: 17.08.2016
(73) Titulaire: Peugeot Citroën Automobiles SA, 78140 Vélizy-Villacoublay (FR)
(72) Inventeur: Bail, Jean-Bastien, 92100 BOULOGNE BILLANCOURT (FR); Gouedard, Olivier, 91670 ANGERVILLE (FR)

(56) Documents cités:
- WO-A1-2014/068221
- WO-A1-2014/122380

## Description

L'invention porte sur un support destiné à recevoir une sonde comprenant un boîtier et un faisceau électrique, le support comprenant une première partie, une deuxième partie, une troisième partie et une quatrième partie, la deuxième partie et la troisième partie étant interposées entre la première partie et la quatrième partie.

Il est courant, dans le secteur automobile notamment, d'avoir à rapporter un boîtier sur une ligne d'échappement qui équipe un moteur à combustion interne d'un véhicule automobile. Le boîtier loge par exemple une sonde pour mesurer une quantité d'un composant chimique contenu à l'intérieur de gaz d'échappement produits par le moteur à combustion interne. Pour ce faire, il est connu d'équiper la ligne d'échappement d'une accroche sur laquelle est rapporté temporairement un support pourvu du boîtier.

Un premier inconvénient réside dans le fait que la ligne d'échappement est modifiée pour ménager l'accroche, ce qui est susceptible d'altérer la ligne d'échappement.

Un deuxième inconvénient réside dans le fait que la ligne d'échappement est susceptible de comporter une paroi extérieure comportant une surface extérieure lisse, ce qui est susceptible d'empêcher une fixation optimisée du support sur la ligne d'échappement.

Le document FR 3,003,911 décrit par ailleurs un système de maintien temporaire d'un écran de protection thermique sous une caisse du véhicule automobile qui n'est pas adapté à une fixation du boîtier sur la ligne d'échappement tel que souhaitée. Le document WO2014068221 décrit un support destiné à recevoir une sonde conforme au préambule de la revendication 1.

Un but de la présente invention est de proposer un support d'un boîtier sur une ligne d'échappement équipant un véhicule automobile, le support étant efficace, aisé d'utilisation et ne nécessitant pas de modification de la ligne d'échappement, la ligne d'échappement comprenant une paroi extérieure qui comporte une surface extérieure souhaitée quelconque, lisse notamment.

Un support de la présente invention est un support destiné à recevoir une sonde comprenant un boîtier et un faisceau électrique. Le support comprend une première partie, une deuxième partie, une troisième partie et une quatrième partie. La deuxième partie et la troisième partie sont interposées entre la première partie et la quatrième partie. la troisième partie comprend une échancrure qui est destinée à recevoir une ligne d'échappement équipant un véhicule automobile

Selon la présente invention, la deuxième partie comporte des moyens de maintien réversibles destinés à recevoir un faisceau électrique que comprend la sonde.

Les moyens de maintien réversibles comportent préférentiellement une goulotte destinée à recevoir ce faisceau électrique.

La goulotte comporte préférentiellement un rétreint destiné à immobiliser le faisceau électrique à l'intérieur de la goulotte.

De préférence, la première partie et/ou la quatrième partie est équipée d'un organe de blocage qui est logé à l'intérieur de l'échancrure, l'organe de blocage étant mobile entre une première position dans laquelle l'organe de blocage interdit une échappée de la ligne d'échappement hors de l'échancrure, en position d'utilisation du support sur la ligne d'échappement, et une deuxième position dans laquelle l'organe de blocage est escamoté pour laisser accès libre à l'échancrure pour la ligne d'échappement.

L'organe de blocage est avantageusement conformé en une languette qui comprend une première portion et une deuxième portion, la première portion formant avec la deuxième portion un angle A compris entre 80° et 100°.

L'organe de blocage est avantageusement monté mobile en basculement sur la partie auquel l'organe de blocage est affecté.

La première partie comporte avantageusement une cavité pour loger au moins partiellement le boîtier qui est rapporté sur le support par l'intermédiaire d'un premier moyen de fixation réversible.

Le support comporte avantageusement un deuxième moyen de fixation réversible qui est prévu pour fixer de manière réversible le support sur un élément du véhicule automobile.

Une ligne d'échappement de la présente invention est équipée d'un tel support, la ligne d'échappement étant agencée en un tube d'un premier rayon et l'échancrure étant ménagée selon un cercle d'un deuxième rayon, le deuxième rayon étant compris entre 1 fois et 1,2 fois le premier rayon.

Un procédé d'utilisation d'un tel support, qui ne fait pas partie de l'invention, est principalement reconnaissable en ce que le procédé comprend les étapes successives suivantes:
- une étape de mise en place du boîtier à l'intérieur de la cavité,
- une étape de fixation du boîtier sur le support par l'intermédiaire du premier moyen de fixation réversible,
- une étape d'insertion du faisceau électrique à l'intérieur de la goulotte,
- une étape de mise en place de l'organe de blocage en deuxième position,
- une étape de mise en place de la ligne d'échappement à l'intérieur de l'échancrure,
- une étape de mise en place de l'organe de blocage en première position,
- une étape de une étape de fixation du boîtier sur le véhicule automobile,
- une étape de désolidarisation du support et du boîtier, et
- une étape de fixation du support sur le véhicule automobile par l'intermédiaire du deuxième moyen de fixation réversible.

D'autres caractéristiques et avantages de la présente invention apparaîtront à la lecture de la description qui va en être faite d'exemples de réalisation, en relation avec les figures des planches annexées, dans lesquelles :
La figure 1 est une illustration schématique d'un support de la présente invention en position d'utilisation du support.
La figure 2 est une illustration schématique du support illustré sur la figure 1 hors-tout.

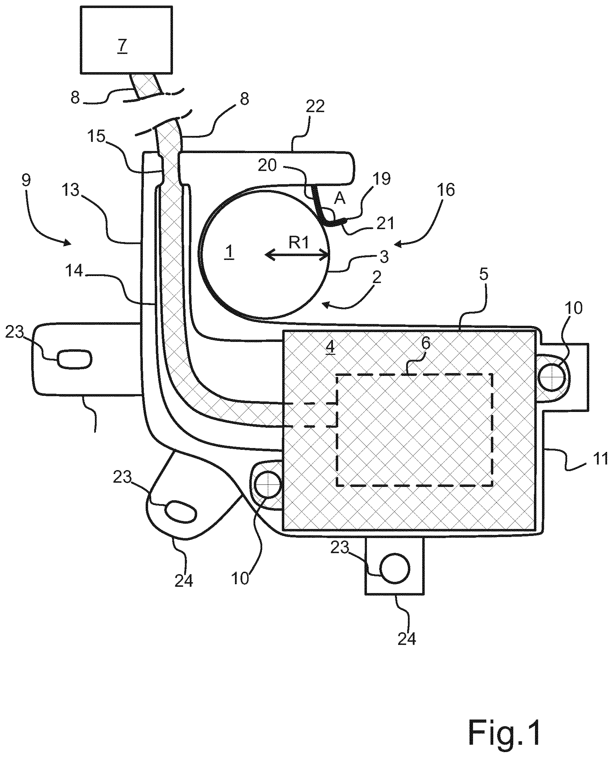

Sur la figure 1, un véhicule automobile est pourvu d'un moteur à combustion interne qui est équipé d'une ligne d'échappement 1 pour évacuer des gaz d'échappement depuis le moteur à combustion interne vers un environnement extérieur. La ligne d'échappement 1 est conformée en un tube qui est ménagé selon un premier rayon R₁. La ligne d'échappement 1 comprend une paroi extérieure 2 dont une surface extérieure 3 est susceptible d'être lisse.

Le véhicule automobile est équipé d'une sonde 4 pour mesurer une quantité d'au moins un composant chimique contenu à l'intérieur des gaz d'échappement. Le composant chimique est par exemple un oxyde d'azote. La sonde 4 comprend un boîtier 5 qui loge un calculateur 6 relié à un organe de commande-moteur 7 par l'intermédiaire d'un faisceau électrique 8. La sonde 4 comprend également un capteur qui comporte une partie filaire reliée à la sonde et logée à l'intérieur de la ligne d'échappement, en position d'utilisation de la sonde.

Pour permettre la mise en position d'utilisation de la sonde 4, par exemple à partir de la fixation de la sonde 4 sous un plancher du véhicule automobile, la sonde 4 est pourvue temporairement d'un support 9 qui est rapportée sur la sonde 4 par un premier moyen de fixation réversible 10. Le premier moyen de fixation réversible 10 est indifféremment un moyen de fixation par emboîtement, par vissage, par rivetage ou analogue.

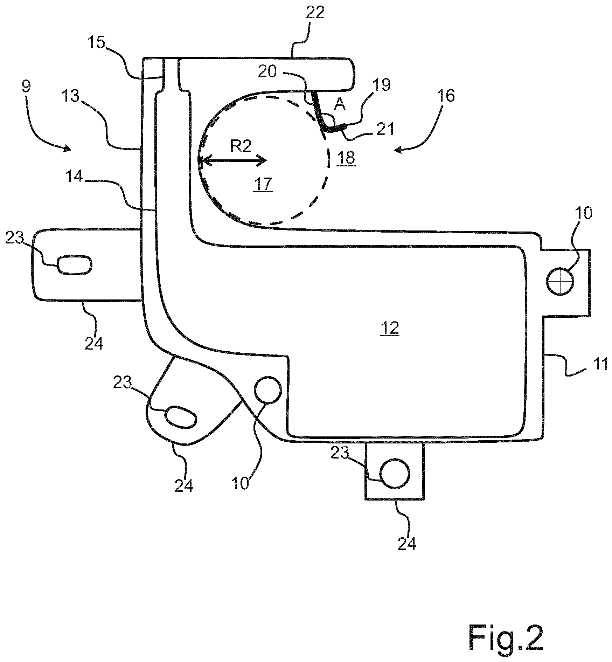

Sur la figure 2, le support 9 comprend une première partie 11 qui est équipée du premier moyen de fixation 10. La première partie 11 comprend préférentiellement une cavité 12 pour loger au moins partiellement le boîtier 5.

Le support 9 comprend une deuxième partie 13 qui est équipée de moyen de maintien réversibles, ici de préférence une goulotte 14 conformée en U qui est apte à loger le faisceau électrique 8. Plus particulièrement, la goulotte 14 comprend un rétreint 15 pour le maintien réversible en position du faisceau électrique 8 à l'intérieur de la goulotte 14. Le rétreint 15 est apte à maintenir immobile le faisceau électrique 8 par contact étroit entre le rétreint 15 et le faisceau électrique 8. D'autres moyens de maintien réversibles peuvent être prévus comme des clips de maintien du faisceau.

Le support 9 comprend une troisième partie 16 qui comporte une échancrure 17 conformée en un demi-cercle qui est ménagée selon un deuxième rayon R₂. Le deuxième rayon R₂ est supérieur ou égal au premier rayon R₁. A titre d'exemple, le deuxième rayon R₂ est compris entre 1 fois et 1,2 fois le premier rayon R₁. L'échancrure 17 comporte un passage 18 pour la mise en place de la ligne d'échappement 1 à l'intérieur de l'échancrure 17. Le passage 18 forme un accès à l'échancrure 17 pour la ligne d'échappement 1. Le passage 18 est équipé d'un organe de blocage 19 qui est mobile entre une première position dans laquelle l'organe de blocage 19 interdit une échappée de la ligne d'échappement 1 hors de l'échancrure 17 et une deuxième position dans laquelle l'organe de blocage 19 est escamoté pour laisser accès libre à l'échancrure 17 pour la ligne d'échappement 1. L'organe de blocage 19 est logé à l'intérieur de l'échancrure 17 pour maintenir en position immobile la ligne d'échappement 1 en position d'utilisation du support 9. L'organe de blocage 19 est par exemple conformé en une languette souple qui comprend une première portion 20 et une deuxième portion 21, la première portion 20 formant avec la deuxième portion 21 un angle A compris entre 80° et 100°.

Le support 9 comprend une quatrième partie 22 qui est pourvue de l'organe de blocage 19. La quatrième partie 22 est par exemple agencée en un bras pour enserrer la ligne d'échappement 1 entre la quatrième partie 22 et la première partie 11. Autrement dit, l'échancrure 17 est préférentiellement interposée entre la première partie 11 et la quatrième partie 22. Plus particulièrement, l'organe de blocage 19 est monté mobile en basculement sur la quatrième partie 22 entre la première position et la deuxième position, en étant disposé à l'intérieur de l'échancrure 17 pour être apte à immobiliser la ligne d'échappement 1 à l'intérieur de l'échancrure 17, en position d'utilisation du support 9.

Le support 9 est globalement agencé en un crochet dont la quatrième partie 22 surplombe la première partie 11 en position d'utilisation du support 9 sur la ligne d'échappement 1, telle qu'illustrée sur la figure 1.

Le support 9 est pourvu d'un deuxième moyen de fixation réversible 23 qui est indifféremment un moyen de fixation par emboîtement, par vissage, par rivetage ou analogue. Le deuxième moyen de fixation réversible 23 est prévu pour fixer de manière réversible le support 9 sur un élément du véhicule automobile, tel qu'un bas de caisse, un plancher ou analogue, en vue d'une utilisation ultérieure du support 9, pour une opération de maintenance notamment. Le deuxième moyen de fixation réversible 23 est par exemple ménagé sur des pattes 24 que comprend le support 9.

Un procédé d'utilisation du support 9 comprend avantageusement les étapes successives suivantes :
- une étape de mise en place du boîtier 5 à l'intérieur de la cavité 12,
- une étape de fixation du boîtier 5 sur le support 9 par l'intermédiaire du premier moyen de fixation réversible 10,
- une étape d'insertion du faisceau électrique 8 à l'intérieur de la goulotte 14,
- une étape de mise en place de l'organe de blocage 19 en deuxième position,
- une étape de mise en place de la ligne d'échappement 1 à l'intérieur de l'échancrure 17,
- une étape de mise en place de l'organe de blocage 19 en première position,
- une étape de une étape de fixation du boîtier 5 sur le véhicule automobile,
- une étape de désolidarisation du support 9 et du boîtier 5, et
- une étape de fixation du support 9 sur le véhicule automobile par l'intermédiaire du deuxième moyen de fixation réversible 23.

Ces dispositions sont telles que le support 9 constitue un organe de maintien temporaire de la sonde 4 efficace, simple et facile à utiliser.

Ces dispositions permettent de mettre en attente le boîtier 5 lors d'un processus de montage de la sonde 4 sur la ligne d'échappement 1, y compris dans le cas où la surface extérieure 3 de la paroi extérieure 2 de la ligne d'échappement 1 est lisse.

Ces dispositions procurent un gain de temps lors du montage de la sonde 4 sur la ligne d'échappement 1 à partir d'une facilitation de la manipulation du support 9 notamment.

## Revendications

1. Support (9) destiné à recevoir une sonde (4) comprenant un boîtier (5) et un faisceau électrique (8), le support (9) comprenant une première partie (11), une deuxième partie (13), une troisième partie (16) et une quatrième partie (22), la deuxième partie (13) et la troisième partie (16) étant interposées entre la première partie (11) et la quatrième partie (22), la troisième partie (16) comprenant une échancrure (17) qui est destinée à recevoir une ligne d'échappement (1) équipant un véhicule automobile, **caractérisé en ce que** la deuxième partie (13) comporte des moyens de maintien réversibles destinés à recevoir un faisceau électrique (8) que comprend la sonde (4).

2. Support (9) selon la revendication 1, **caractérisé en ce que** les moyens de maintien réversibles comportent une goulotte (14) destinée à recevoir ce faisceau électrique (8).

3. Support (9) selon la revendication 2, **caractérisé en ce que** la goulotte (14) comporte un rétreint (15) destiné à immobiliser le faisceau électrique (8) à l'intérieur de la goulotte (14).

4. Support (9) selon l'une quelconque des revendications précédentes, **caractérisé en ce que** la première partie (11) et/ou la quatrième partie (22) est équipée d'un organe de blocage (19) qui est logé à l'intérieur de l'échancrure (17), l'organe de blocage (19) étant mobile entre une première position dans laquelle l'organe de blocage (19) interdit une échappée de la ligne d'échappement (1) hors de l'échancrure (17), en position d'utilisation du support (9) sur la ligne d'échappement (1), et une deuxième position dans laquelle l'organe de blocage (19) est escamoté pour laisser accès libre à l'échancrure (17) pour la ligne d'échappement (1).

5. Support (9) selon la revendication 4, **caractérisé en ce que** l'organe de blocage (19) est conformé en une languette qui comprend une première portion (20) et une deuxième portion (21), la première portion (20) formant avec la deuxième portion (21) un angle A compris entre 80° et 100°.

6. Support (9) selon l'une quelconque des revendications 4 et 5, **caractérisé en ce que** l'organe de blocage (19) est monté mobile en basculement sur la partie (11,22) auquel l'organe de blocage (19) est affecté.

7. Support (9) selon l'une quelconque des revendications précédentes, **caractérisé en ce que** la première partie (11) comporte une cavité (12) pour loger au moins partiellement le boîtier (5) qui est rapporté sur le support (9) par l'intermédiaire d'un premier moyen de fixation réversible (10).

8. Support (9) selon l'une quelconque des revendications précédentes, **caractérisé en ce que** le support (9) comporte un deuxième moyen de fixation réversible (23) qui est prévu pour fixer de manière réversible le support (9) sur un élément du véhicule automobile.

9. Ligne d'échappement (1) équipé d'un support (9) selon l'une quelconque des revendications précédentes, la ligne d'échappement (1) étant agencée en un tube d'un premier rayon (R₁) et l'échancrure (17) étant ménagée selon un cercle d'un deuxième rayon (R₂), le deuxième rayon (R₂) étant compris entre 1 fois et 1,2 fois le premier rayon (R₁).

## Patentansprüche

1. Halterung (9), die dazu bestimmt ist, eine Sonde (4) aufzunehmen, die ein Gehäuse (5) und ein elektrisches Kabelbündel (8) umfasst, wobei die Halterung (9) einen ersten Teil (11), einen zweiten Teil (13), einen dritten Teil (16) und einen vierten Teil (22) umfasst, wobei der zweite Teil (13) und der dritte Teil (16) zwischen den ersten Teil (11) und den vierten Teil (22) eingefügt sind, wobei der dritte Teil (16) eine Aussparung (17) umfasst, die dazu bestimmt ist, einen Abgasstrang (1), der ein Kraftfahrzeug ausstattet, aufzunehmen, **dadurch gekennzeichnet, dass** der zweite Teil (13) umkehrbare Mittel zum Halten umfasst, die dazu bestimmt sind, ein elektrisches Kabelbündel (8), das die Sonde (4) umfasst, aufzunehmen.

2. Halterung (9) nach Anspruch 1, **dadurch gekennzeichnet, dass** die umkehrbaren Haltemittel eine Rinne (14) umfassen, die dazu bestimmt ist, das elektrische Kabelbündel (8) aufzunehmen.

3. Halterung (9) nach Anspruch 2, **dadurch gekennzeichnet, dass** die Rinne (14) eine Einschnürung (15) umfasst, die dazu bestimmt ist, das elektrische Kabelbündel (8) im Inneren der Rinne (14) stillzustellen.

4. Halterung (9) nach einem der vorhergehenden Ansprüche, **dadurch gekennzeichnet, dass** der erste Teil (11) und/oder der vierte Teil (22) mit einem Blockierungselement (19) ausgestattet ist/sind, das im Inneren der Aussparung (17) aufgenommen ist, wobei das Blockierungselement (19) zwischen einer ersten Position, in der das Blockierungselement (19) ein Austreten des Abgasstrangs (1) aus der Aussparung (17), in Gebrauchsposition der Halterung (9) auf dem Abgasstrang (1) untersagt, und einer zweiten Position, in der das Blockierungselement (19) eingefahren ist, um freien Zugang zu der Aussparung (17) für den Abgasstrang (1) zu lassen, beweglich ist.

5. Halterung (9) nach Anspruch 4, **dadurch gekennzeichnet, dass** das Blockierungselement (19) aus einer Lasche gestaltet ist, die einen ersten Abschnitt (20) und einen zweiten Abschnitt (21) umfasst, wobei der erste Abschnitt (20) mit dem zweiten Abschnitt (21) einen Winkel A zwischen 80° und 100° bildet.

6. Halterung (9) nach einem der Ansprüche 4 und 5, **dadurch gekennzeichnet, dass** das Blockierungselement (19) kippend auf dem Teil (11, 22), dem das Blockierungselement (19) zugeordnet ist, beweglich montiert ist.

7. Halterung (9) nach einem der vorhergehenden Ansprüche, **dadurch gekennzeichnet, dass** der erste Teil (11) einen Hohlraum (12) umfasst, um das Gehäuse (5), das auf der Halterung (9) über ein erstes umkehrbares Befestigungsmittel (10) angebaut ist, mindestens teilweise aufzunehmen.

8. Halterung (9) nach einem der vorhergehenden Ansprüche, **dadurch gekennzeichnet, dass** die Halterung (9) ein zweites umkehrbares Befestigungsmittel (23) umfasst, das vorgesehen ist, um die Halterung (9) umkehrbar auf einem Element des Kraftfahrzeugs zu befestigen.

9. Abgasstrang (1), der mit einer Halterung (9) nach einem der vorhergehenden Ansprüche ausgestattet ist, wobei der Abgasstrang (1) in einer Röhre mit einem ersten Radius (R₁) eingerichtet ist, und die Aussparung (17) gemäß einem Kreis mit einem zweiten Radius (R₂) eingerichtet ist, wobei der zweite Radius (R₂) zwischen 1 Mal und 1, 2 Mal dem ersten Radius (R₁) beträgt.

## Claims

1. A bracket (9) intended to receive a probe (4) including a case (5) and a wiring harness (8), the bracket (9) including a first part (11), a second part (13), a third part (16) and a fourth part (22), the second part (13) and the third part (16) being interposed between the first part (11) and the fourth part (22), the third part (16) including an indentation (17) which is intended to receive an exhaust system (1) provided on a motor vehicle, **characterized in that** the second part (13) comprises reversible holding means intended to receive a wiring harness (8) which the probe (4) includes.

2. The bracket (9) according to claim 1, **characterized in that** the reversible holding means comprise a wireway (14) intended to receive this wiring harness (8).

3. The bracket (9) according to claim 2, **characterized in that** the wireway (14) comprises a necking (15) intended to immobilize the wiring harness (8) in the interior of the wireway (14).

4. The bracket (9) according to any one of the preceding claims, **characterized in that** the first part (11) and/or the fourth part (22) is equipped with a blocking member (19) which is housed in the interior of the indentation (17), the blocking member (19) being movable between a first position in which the blocking member (19) prohibits an escape of the exhaust system (1) out from the indentation (17), in position of use of the bracket (9) on the exhaust system (1), and a second position in which the blocking member (19) is retracted to allow free access to the indentation (17) for the exhaust system (1).

5. The bracket (9) according to claim 4, **characterized in that** the blocking member (19) is shaped as a tab which includes a first portion (20) and a second portion (21), the first portion (20) forming with the second portion (21) an angle A comprised between 80° and 100°.

6. The bracket (9) according to any one of claims 4 and 5, **characterized in that** the blocking member (19) is mounted so as to be movable in a tilting manner on the part (11, 22) to which the blocking member (19) is assigned.

7. The bracket (9) according to any one of the preceding claims, **characterized in that** the first part (11) comprises a cavity (12) to house at least partially the case (5) which is attached on the support (9) by means of a first reversible attachment means (10).

8. The bracket (9) according to any one of the preceding claims, **characterized in that** the bracket (9) comprises a second reversible attachment means (23) which is provided to attach in a reversible manner the bracket (9) on an element of the motor vehicle.

9. An exhaust system (1) equipped with a bracket (9) according to any one of the preceding claims, the exhaust system (1) being arranged as a tube of a first radius (R₁), and the indentation (17) being arranged according to a circle of a second radius (R₂), the second radius (R₂) being comprised between 1 and 1.2 times the first radius (R₁).
